# EUROPEAN PATENT APPLICATION

(11) **EP 1 826 371 A1**
(43) Date of publication of application: **29.08.2007**
(21) Application number: 07003801.3
(22) Date of filing: 23.02.2007
(51) Int. Cl.: F01N 3/025, F01N 7/08, F01N 9/00

(54) **Particulate trap regeneration system and method**

(30) Priority: 24.02.2006 US 361215
(71) Applicant: Eaton Corporation, Cleveland, Ohio 44114-2584 (US)
(72) Inventor: Eybergen, William Nicholas, Windsor, Ontario N9G 2P6 (CA); Shamis, Dmitry Arie, Commerce Township, Michigan 48382 (US)
(74) Representative: Rüger, Barthelt & Abel Patentanwälte

(57) **Abstract**

A particulate trap regeneration system (12) has an exhaust pipe (18) that is connected between an engine (14) and a particulate trap (22) and an air pump (20) that is connected to the exhaust pipe near the engine. The exhaust pipe (18) has a double-walled configuration where the exhaust travels within the pipe and air from the air pump travels within the space between the walls, capturing heat from the exhaust. This configuration also keeps the outside of the exhaust pipe (18) cool, improving safety and durability. Because the air entering the trap (22) is near the exhaust temperature, the burner requires less energy to raise the temperature of the particulates sufficiently to promote burning.

## Description

### Technical Field

The present invention relates to management of particulates in diesel engine exhaust, and more particularly to a particulate trap regeneration system.

### Background of the Invention

As is known in the art, burning diesel fuel generates particulates that need to be filtered and contained. Diesel engine systems normally incorporate a particulate trap having a filter that captures particulates from the exhaust. However, over time, the trap becomes too full to filter exhaust effectively and requires regeneration before it can accumulate more particulate matter, Regeneration is usually conducted by burning the particulates within the trap, which requires an external burner to increase the temperature of the particulates.

Currently known systems provide a separate exhaust path and a diverter valve for temporarily diverting exhaust away from the trap during regeneration. Burning is enhanced by adding fuel, oxygen, and/or a catalyst to the particulates because the exhaust entering the trap usually does not have enough fuel and/or oxygen to sustain particulate burning. These systems, however, tend to require complicated routing to accommodate separate flow paths for the oxygen and catalyst. Moreover, current systems do not take advantage of the heat already existing in the exhaust and simply allow the heat to dissipate into the environment as wasted energy.

There is a desire for a particulate trap regeneration system that operates more efficiently and that has a simpler configuration than currently known systems.

### Summary of the Invention

The present invention is directed to a particulate trap regeneration system having a simplified configuration. The system includes an exhaust pipe that is connected between an engine and a particulate trap and an air pump that is connected to the exhaust pipe near the engine. A fuel injector and a burner supply fuel and heat to the trap so that the particulates in the trap can be burned off.

The exhaust pipe includes two channels, one of which carries exhaust from the engine and the other of which carries air from the pump. The two channels have one common wall so that heat from the exhaust is absorbed by the air from the air pump. Because the air entering the trap is at the exhaust temperature, the burner requires less energy to raise the temperature of the particulates sufficiently to promote burning. In one embodiment, the exhaust pipe has a double-walled configuration where the exhaust travels within the inner portion of the pipe and the air travels within the space between the walls. This configuration also keeps the outside of the exhaust pipe cool, improving safety and durability.

By capturing the heat from the exhaust into air entering the particulate trap, the invention is efficient to operate and also has a simpler structure than currently known particulate trap regeneration systems.

### Brief Description of the Drawings

Figure 1 is a schematic diagram of an engine and a particulate trap regeneration system according to one embodiment of the invention.

Figure 2 is a more detailed schematic diagram of the air pump and the exhaust pipe in Figure 1; and

Figure 3 is a cross-sectional diagram of an alternative exhaust pipe configuration.

### Detailed Description of the Embodiments

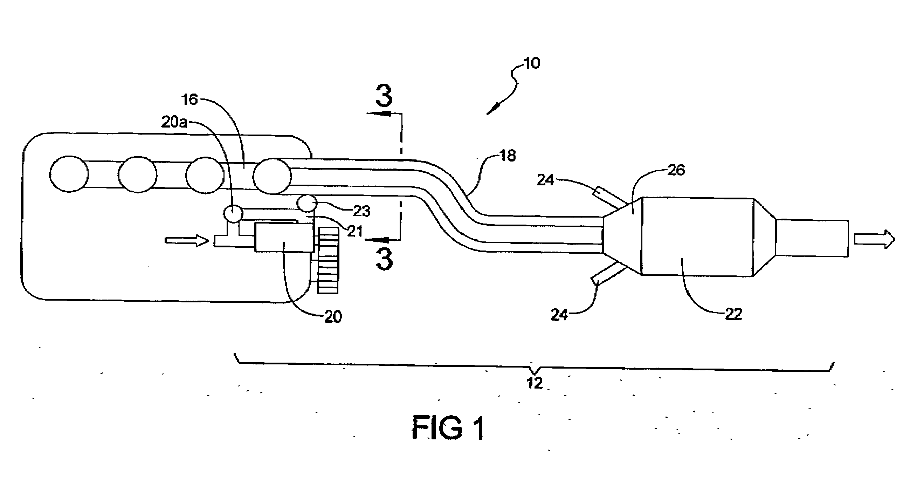

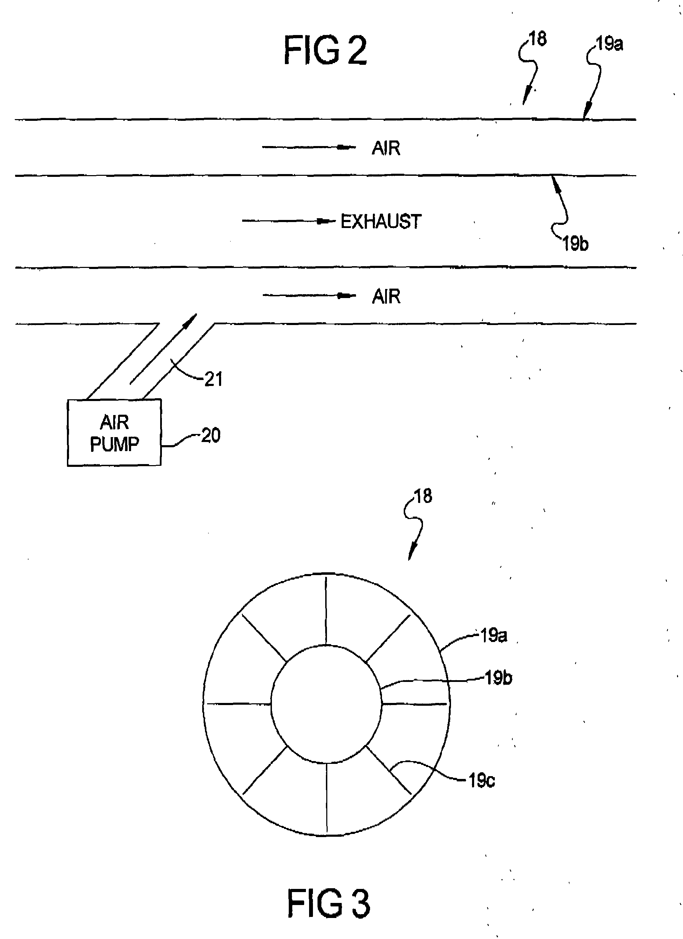

Figure 1 shows an engine system 10 that incorporates a particulate trap regeneration system 12 according to one embodiment of the invention. The engine system 10 includes an engine 14 having an exhaust manifold 16 that sends exhaust through an exhaust pipe 18. In one embodiment, the exhaust pipe 18 has a double-walled 19a, 19b structure that keeps the outside of the exhaust pipe 18 relatively cool (Figure 2). The double walled exhaust pipe 18 also provides a space 19c between the walls for air to flow through and be heated by heat radiating through the inner wall 19b from the exhaust. Note that other exhaust pipe configurations are possible without departing from the scope of the invention as long as there are two pipe channels that share at least one wall through which heat from the exhaust in one channel is captured by air traveling through the adjoining channel.

To further promote heat transfer, the exhaust pipe 18 may include a plurality of fins 19c that extend radially between the inner and outer walls 19b, 19a. Although the embodiment shown in Figure 3 show the fins 19c extending from the inner wall 19b toward the outer wall 19a without touching the outer wall 19a, those of ordinary skill in the art will understand that the fins can extend in any direction and touch either the inner wall 19b, the outer wall 19a, or both without departing from the scope of the invention.

The exhaust pipe 18 is connected to a particulate trap 22 that filters and traps particulates in the exhaust in any known manner. An air supply, such as an air pump 20 with a bypass valve 20a, is incorporated into the regeneration system 12 and is connected to the exhaust pipe 18 so that an outlet 21 of the air pump 20 is disposed between the walls 19a, 19b of the exhaust pipe 18. The air pump 20 supplies additional oxygen to the particulate trap 22 so that the particulate matter within the trap 22 will burn. Also, the air pump 20 is used to overcome back pressure within the engine system 10 to force oxygen into the trap 22. Note that other devices, such as compressed air from the engine boosting device, an oversized air brake compressor, or a storage container of compressed air may be used in place of the air pump 20 without departing from the scope of the invention. If desired, the regeneration system 12 may also include a one-way check valve 23 to prevent exhaust from flowing backwards in the pipe 18 back toward the engine 12. This valve can be placed anywhere in the air system. Possible locations include at the inlet or outlet of the compressor, in the double walled pipe or the entrance to the particulate trap.

In one embodiment, the air pump 20 is a mechanically-driven air pump, such as a Roots blower. Although an electrically-driven air pump may be used without departing from the scope of the invention, using a mechanically-driven air pump 20 provides efficient operation of the system 10 because gear and belt driven air pumps typically have a mechanical energy transfer efficiency above 90%. If the air pump 20 is mechanically-driven, the air pump 20 is attached to the engine 14 and equipped with a electro-mechanical clutch (not shown) to stop and start pump operation. If the air pump is electrically-driven, it can be mounted anywhere. In both cases, the air pump 20 is controlled via an algorithm in an after-treatment controller (not shown) so that it operates only during a trap regeneration process.

To supply the fuel and increased temperatures required for burning the particulates, one or more injectors 24 and a burner 26 are coupled to the particulate trap 22. In one embodiment, regeneration is conducted only when the trap 22 is filled with enough particulate to start choking off exhaust flow. This condition may be detected in any desired way, such as by measuring a pressure drop across the filter, a predetermined time period, or sensors that detect the thickness or amount of particulate.

During the regeneration process, the air pump 20 starts blowing air between the walls 19a, 19b of the exhaust pipe 18. As noted above, the double-walled structure of the exhaust pipe 18 prevent heat from dissipating into the atmosphere. As the pumped air travels in the channel 19c between the walls 19a, 19b of the exhaust pipe 18, it is heated by the hot exhaust inside the inner channel of the pipe 18 (Figure 2). As a result, the air is approaching the exhaust temperature by the time it reaches the trap 22,. The air captures the heat in the exhaust and therefore reduces the amount of energy needed from the burner 26 to heat the particulates in the trap 2'2.

The heated air mixes with fuel or a catalyst supplied by the injectors 24 in the trap 22 and is further heated by the burner 26. The air-fuel mixture and high temperatures cause the particulates in the trap 22 to burn away, regenerating the trap 22 so that it can accumulate more particulate matter.

The inventive system is therefore more efficient than currently known systems because it does not require any extra pipes to supply oxygen to the particulate trap; instead, it incorporates a double-walled exhaust pipe that carries exhaust within the pipe and air between the walls, allowing the air to absorb heat energy from the exhaust rather than wasting it as dissipated heat. This reduces the demands on the burner because the air temperature entering the trap is already near exhaust temperature and requires less heating for regeneration to occur. These simplifications make the inventive system economical to manufacture and operate.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A particulate trap system (12), comprising:
a particulate trap (22) that traps particulates in exhaust from an engine (14);
an air supply (20) for directing air to the particulate trap;
an exhaust pipe (18) coupled to the particulate trap and connectable to the engine, wherein the exhaust pipe includes a first channel that carries exhaust and a second channel that carries air from the air supply, wherein the first channel and the second channel have a common wall that allows heat to transfer from the exhaust to the air; and
a burner (26) that heats the particulates in the particulate trap to regenerate the particulate trap.

2. The particulate trap system of claim 1, wherein the air supply is one selected from the group consisting of an air pump, an engine boosting device, a brake compressor, and stored compressed air.

3. The particulate trap system of claim 2, wherein the air pump is a mechanically-driven air pump.

4. The particulate trap system of daim 2, further comprising a clutch that selectively controls operation of the air pump.

5. The particular trap system of claim 2, wherein the air pump is an electrically-driven air pump.

6. The particulate trap system of claim 1, wherein the exhaust pipe is a double-walled pipe having an inner wall (19b) and an outer wall (19a).

7. The particulate trap system of claim 6, further comprising at least one heat transfer fin (19c) extending substantially radially between the inner wall and the outer wall.

8. The particulate trap system of claim 6, wherein the second channel is a space between the inner wall and the outer wall, and wherein the air supply directs air into the second channel.

9. The particulate trap system of claim 1, further comprising at least one fuel injector (24) that injects fuel into the particulate trap.

10. An engine system (10) comprising:
an engine (14) having an exhaust manifold;
a particulate trap (22) that traps particulates in exhaust emitted through the exhaust manifold;
an air supply (20) for directing air to the particulate trap;
an exhaust pipe (18) connecting the exhaust manifold to the particulate trap, wherein the exhaust pipe includes a first channel that carries exhaust and a second channel that carries air from the air supply, wherein the first channel and the second channel have a common wall (19b) to allow the heat transfer from the exhaust to the air; and
a burner (26) that heats the particulates in the particulate trap to regenerate the particulate trap.

11. The particulate trap system of claim 10, wherein the air supply is one selected from the group consisting of an air pump, an engine boosting device; a brake compressor, and stored compressed air.

12. The engine system of claim 10, wherein the air supply is a mechanically-driven air pump coupled to the engine.

13. The engine system of claim 12, further comprising a clutch that selectively connects and disconnects the air pump with the engine.

14. The engine system of claim 10, wherein the exhaust pipe is a double-walled pipe having an inner wall (19b) and an outer wall (19a).

15. The particulate trap system of claim 14, further comprising at least one heat transfer fin (19c) extending substantially radially between the inner wall and the outer wall.

16. The engine system of claim 14, wherein the second channel is a space between the inner wall and the outer wall, and wherein the air supply directs air into the second channel.

17. The engine system of claim 10, further comprising at least one fuel injector (24) that injects fuel into the particulate trap.

18. The engine system of claim 10, further comprising a check valve (23) connected to the exhaust pipe.

19. A method of regenerating a particulate trap (22) in an engine system (10), comprising:
directing air and exhaust into the particulate trap through an exhaust pipe (18) having two channels with a common wall (19c), wherein the air absorbs heat in the exhaust through the common wall; and
heating particulates in the particulate trap to burn the particulates.

20. The method of claim 19, further comprising adding at least one of a fuel and a catalyst to the particulate trap.
